# EUROPÄISCHE PATENTANMELDUNG

(11) **EP 1 391 478 A1**
(43) Veröffentlichungstag der Anmeldung: **25.02.2004**
(21) Anmeldenummer: 03090259.7
(22) Anmeldetag: 19.08.2003
(51) Int. Cl.: C08J 5/24, C08L 61/20, C08G 12/38, B32B 27/04, B44C 5/04

(54) **Phenolfreie Dekorlaminate und Verfahren zu ihrer Herstellung**

(30) Priorität: 23.08.2002 DE 10238807
(71) Anmelder: Cassaghi, Pietro, 26027 Rivolta D'Adda (IT)
(72) Erfinder: Ackner, Fritz, 04105 Leipzig (DE); Cassaghi, Pietro, 28027 Rivolta d'Adda (CR) (IT); Görmar, Gerhard, Dr., 04277 Leipzig (DE); Kosche, Gerhard, 53804 Much (DE); Sorio, Guiseppe, 39031 Brunico (BZ) (IT)
(74) Vertreter: Wablat, Wolfgang, Dr.Dr.

(57) **Zusammenfassung**

Die Erfindung betrifft phenolfreie Dekorlaminate, d.h. dekorative Schichtpressstoffplatten wie HPL, CPL und LPL aus mehrschichtigen Trägermaterialien, in denen keine Phenolharze zur Tränkung zum Einsatz kommen und die damit toxikologisch unbedenklicher, geruchsneutral und kostengünstiger in ihrer Herstellung sind.

Erfindungsgemäß gelingt das, wenn als Tränkharzsystem ein Harnstoff-Melamin-Formaldehyd-Harz eingesetzt wird, das ausschließlich in einem wässrigen Reaktionsmedium verarbeitet und dem eine Polymerdispersion zugesetzt wurde, wobei das Tränkharz in einer unteren Stufe im pH-Bereich von 7,0 bis 8,5 und in einer zweiten Stufe im pH-Bereich von 4,0 bis 6,0 hergestellt wurde.

Abschließend wird dieser Harzansatz neutralisiert, dem Trägermaterial zugegeben und mit diesem verpresst.

## Beschreibung

Die Erfindung betrifft phenolfreie Dekorlaminate, d.h. dekorative Schichtpressstoffplatten wie HPL (Hochdruck-Schichtstoffpressplatten bzw. high pressure laminate), CPL (continous pressure laminate) und LPL (low pressure laminate) aus mehrschichtigen Trägermaterialien, in denen keine Phenolharze zur Tränkung zum Einsatz kommen und die damit toxikologisch unbedenklicher, geruchsneutral und kostengünstiger in ihrer Herstellung sind.

Dekorlaminate, auch als dekorative Schichtpressstoffplatten (HPL, CPL, LPL) gemäß DIN EN 438 Teil 1 bezeichnet, besitzen einen mehrlagigen Aufbau aus Schichten von Faserbahnen (insbesondere Papier), imprägniert mit härtbaren Harzen. Sie werden bei hoher Temperatur und unter Druck verpresst.

Die bisher bekannten Dekorlaminate bestehen immer aus einer mit Melaminharz getränkten Oberflächenschicht und mehreren mit Phenolharz getränkten Unterschichten, auch Kernschichten genannt. Für die Unterschichten wird sogenanntes Kraftpapier eingesetzt. Die Oberschicht ist ein spezielles Dekorpapier, welches durch Bedrucken mit speziellen Farben die dekorative Oberfläche darstellt.

Diese Dekorlaminate haben den Nachteil, dass sie einen starken Eigengeruch nach Phenol aufweisen und sogar Spuren von nicht umgesetzten Phenol im Laminat je nach Herstellungsbedingungen noch nachweisbar sind. Phenol ist toxikologisch bedenklich. Insbesondere im Recyclingprozess und bei der Verbrennung können sich durch thermische Folgereaktionen mit anderen anwesenden Substanzen, vor allem mit halogenhaltigen organischen Verbindungen, noch toxischere Stoffe bilden.

Das Phenolharz wird ausschließlich in stark basischen Reaktionsmedien unter Einsatz von Alkalihydroxiden hergestellt. Um eine bessere Reaktivität der Harze während des Tränkprozesses und vor allem während des Härteprozesses beim Verpressen zu gewährleisten, ist es notwendig, auch das Kraftpapier mit einem pH-Wert von ca. 8,5 bis 9,0 einzustellen.

Es ist bekannt, dass durch Zugabe von Harnstoff zum Harzansatz eine Verringerung des Phenolgehaltes erreicht wird. Nachteilig dabei ist aber, dass beim Einsatz von Harnstoffgehalten über 10 % Masseanteilen Harnstoff im festen Harz die gute Wasserfestigkeit des Phenolharzes sehr stark zurück geht. Ursache ist, dass der Harnstoff unter den Reaktionsbedingungen für Phenolharze (pH-Wert >>8) nicht reagiert und leicht zu einer vermehrten Wasseraufnahme des Harzes führt.

Ein weiterer Nachteil der Herstellung von Dekorlaminaten aus der Kombination von melaminharzgetränkten und phenolharzgetränkten Papieren besteht in einer Unverträglichkeit an den Grenzflächen. Ursache dafür sind die unterschiedlichen Katalysatoren, welche die pH-Werte der getränkten Papiere in den sauren bzw. in den basischen Bereich verschieben. Bei extremen Differenzen, z.B. pH-Wert von 9 bei den phenolharzgetränkten Papieren, kann es an den Grenzflächen leicht zu Delaminierungsprozessen kommen.

Aufgabe der Erfindung sind phenolfreie Dekorlaminate (dekorative Schichtpressstoffplatten - HPL, CPL und LPL) aus mehrschichtigen Trägermaterialien, die mit Bindemitteln (Tränkharzen) imprägniert, verklebt und gehärtet sind, in denen keine Phenolharze verwendet werden. Sie sollen sich dadurch insbesondere für den Innenbereich eignen, geruchsneutral, toxikologisch unbedenklicher und kostengünstiger sein. Durch das Fehlen der Phenolharze belasten sie nicht das Raumklima durch ausgasendes Phenol. Die Anforderungen an das Laminat bestehen weiterhin darin, dass es zum Postforming geeignet ist und dass es auf allen bekannten Herstellungsanlagen für Schichtpressstoffe, z.B. Kurztaktpressen, hergestellt und verarbeitet werden kann.

Die Aufgabe wird gelöst durch getränkte Kraftpapiere für die Kernschichten des Dekorlaminates (dekorative Schichtpressstoffplatten - HPL, CPL, LPL) auf der Basis von Tränkharzsystemen, bei denen
als Tränkharzsystem ein Harnstoff-Melamin-Formaldehyd-Harz eingesetzt wird, das ausschließlich in einem wässrigen Reaktionsmedium verarbeitet und dem eine Polymerdispersion zugesetzt wurde,
wobei für das Tränkharz in einer ersten Stufe ein Vorkondensat aus Harnstoff, Melamin und Formaldehyd in Gegenwart eines wenig reaktiven Katalysators im pH-Bereich von 7,0 bis 8,5 und in einem Temperaturbereich von 75°C bis 95°C hergestellt wurde und
in einer zweiten Stufe ein stärkerer saurer Katalysator zusammen mit Harnstoff, Melamin und einer wässrigen Polymerdispersion im pH-Bereich 4,0 bis 6,0 und bei einer Temperatur von 75°C bis 95°C dem Vorkondensat zugegeben wurde und
nach Ende der Reaktionszeit das fertige Tränkharz durch Zugabe von Alkali auf einen pH-Wert von 8,0 bis 8,5 eingestellt wurde.

Als Trägermaterialien sind die für die Herstellung von Laminaten an sich bekannten geeignet. Vorzugsweise werden als Trägermaterialien Kraftpapier und/oder andere saugfähige Papiere verwendet.

Zur Flexibilisierung des Tränkharzes sind als wässrige Polymerdispersionen, solche von Acrylat- oder Methacrylat-, Vinylacetat-Homopolymerisaten, Styrol-Acrylat-, Styrol-Methacrylat-, Polybutadien-Styrol-Co-Polymeren in Mengen von 0,5 Masse% bis 10 Masse% besonders geeignet.

Das Tränkharz wird nach einem speziellen zweistufigen Verfahren hergestellt.

In der ersten Stufe des Verfahrens werden Harnstoff, Melamin mit Formaldehyd in Gegenwart eines wenig reaktiven Katalysators im pH-Bereich 7,0 bis 8,0 bei einer Temperatur von 75°C bis 95°C umgesetzt.

Als wenig reaktive Katalysatoren werden in dieser ersten Stufe vorzugsweise Ammoniumsalze bzw. Alkylammoniumsalze sowie Salze von Aminoalkoholen starker anorganischer und organischer Säuren in Mengen von 0,05 bis 1 Masse% (bzw. auf Gesamtansatzmenge) dem Ansatz zugesetzt.

In einer zweiten Stufe werden Harnstoff, Melamin sowie ein starker saurer Katalysator im pH-Bereich von 4,0 bis 6,0 und bei Bedarf eine Polymerdispersion bei 75°C bis 95°C dem Ansatz zugegeben.

Der Katalysator in der zweiten Stufe ist vorzugsweise eine Mineralsäure oder ein Ammoniumsalz einer Mineralsäure oder einer sehr starken organischen Säure in Mengen von 1 Masse% bis 15 Masse%, bezogen auf den Gesamtansatz. Nach Abschluss der Reaktion wird der Harzansatz neutralisiert.

Die Herstellung von phenolfreien Schichtpressstoffen (HPL, CPL und LPL) erfolgt dann dadurch, dass die Kernschichten des Schichtpressstoffes durch Tränken des Trägermaterials, insbesondere von Kraftpapieren, mit dem so hergestellten Harzsystem getränkt und verpresst werden, wobei
- vor dem Tränkprozess der Kernpapiere das Tränkharz mit einem sauren Katalysator mit gebremster Reaktivität versetzt wird,
- der Oberflächen-pH-Wert des verwendeten Kraftpapiers 7,0 7,5 ist und
- der Harzanteil nach dem Trocknen 30 Masse% bis 60 Masse% an der Gesamtmasse der imprägnierten Papierbahn beträgt.

Als Katalysatoren werden vorzugsweise Ammoniumsalze bzw. Alkylammoniumsalze sowie Salze von Aminoalkoholen starker anorganischer und organischer Säuren (z.B. Benzyldimethylammoniumtosylat) in Mengen von 1 Masse% bis 15 Masse% eingesetzt, wobei der pH-Wert des Tränkharzes 6,5, bis 7,5 eingestellt wird.

Das Imprägnieren der Papierbahnen kann mit allen gebräuchlichen Maschinensystemen zum Aufbringen von Tränkharzen durchgeführt werden.

Die Weiterverarbeitung der mit dem erfindungsgemäß beschriebenen Tränkharz imprägnierten Papierbahnen erfolgt nach den gebräuchlichen und bekannten Technologien, z.B. in Kurztaktpressen.

Vorteilhaft ist, dass die Taktzeiten der Pressen sich deutlich verkürzen. Beim Verpressen zum Hochdruckschichtpressstoff ist die Verarbeitung leichter, weil das neue Aminotränkharz für Kernschichten bessere Fließeigenschaften als Phenolharze besitzt. Im Gegensatz zu den basisch katalysierten Phenolharzen härtet das erfindungsgemäß beschriebene Tränkharz wesentlich schneller aus.

Die hergestellten Laminate sind homogener im Aufbau, weil die dekorative Oberflächenschicht sowie die tragenden Kernschichten mit artverwandten Tränkharzsystemen hergestellt wurden. Außerdem sind keine pH-Unterschiede an den Grenzflächen möglich, und deshalb ist die Gefahr einer Delaminierung vollkommen ausgeschlossen.

Das erfindungsgemäß hergestellte Laminat hat keinerlei Eigengeruch und ist vollständig frei vom toxischen Phenol. Das Produkt hat bessere Eigenschaften in der Abfallverwertung. Bei der thermischen Verwertung können auf Grund der Konstitution nicht solche toxischen Reaktionsprodukte entstehen, wie beim Einsatz von Phenolharzen.

Die Erfindung wird im folgenden Ausführungsbeispiel erläutert, ohne darauf beschränkt zu sein.

### Beispiel

### Harzherstellung

In einem Rührreaktor, ausgestattet mit einem Rückflusskondensator, werden am Beginn der Umsetzung 750 kg Formaldehydiösung (wässrig 36%ig), 290 kg Harnstoff und 1,6 kg Melamin unter Rühren zusammengegeben. Der pH-Wert muss zwischen 7,5 und 8,0 liegen. Wenn der pH-Wert zu niedrig ist, wird er durch Zugabe von Natronlauge eingestellt. Die Reaktionstemperatur wird auf 95°C erhöht. Zu beachten ist, das die Reaktion leicht exotherm ist. Die Reaktionszeit beträgt ca. 45 min.

Anschließend wird eine 20%ige Ammoniumsulfatlösung so lange zugegeben, bis der pH-Wert 4,0 bis 4,2 beträgt. Die Reaktion wird 90 min bei einer Temperatur von 95°C fortgeführt. Danach wird auf 80°C abgekühlt. Zum Reaktionsansatz werden weitere 230 kg Harnstoff, 150 kg Melamin und ca. 500 kg Wasser zugegeben. Nach Beenden der Reaktion wird der Harzansatz mit 10%iger Natriumhydroxidlösung auf einen pH-Wert von 8,5 bis 9,0 eingestellt. Der Ansatz wird weitere 30 min auf 80°C erhitzt und dann auf Raumtemperatur abgekühlt. Der pH-Wert beträgt ca. 8,0. Diese Harzlösung ist mehrere Tage lagerstabil.

### Beharzung

Ein Kraftpapier wird in einer Tränkharzanlage vom Typ VITS in bekannter Weise imprägniert. Das Tränkharz wird vor der Beharzung mit einem Katalysator (Ammoniumtosylat) so eingestellt, dass beim sogenannten Siedetest der Harzlösung ein Gel erhalten wird.

Mit dieser Harzlösung wird in bekannter Weise so imprägniert, dass nach dem Trocknen die Kraftpapierbahn einen Harzgehalt von ca. 30% bis 60% aufweist.

### Laminatherstellung

Das imprägnierte Papier (Imprägnierung wie beschrieben) wird in mehreren Lagen zusammen mit der mit Melaminharz imprägnierten dekorativen Oberschicht in einer Kurztaktpresse zu einem Laminat verpresst. Der Pressdruck beträgt 20 bar bis 100 bar, die Presstemperatur 120°C bis 170°C und die Presszeit 30 bis 3600 sec. Das erhaltene phenolfreie Laminat wird in der bekannten Weise weiterverarbeitet.

## Patentansprüche

1. Phenolfreie Dekorlaminate (= dekorative Schichtpressstoffplatten wie HPL, CPL, LPL) aus mehrschichtigen Trägermaterialien, die mit Bindemitteln (Tränkharz) imprägniert, verklebt und gehärtet sind, **dadurch gekennzeichnet, dass** als Tränkharz ein Harnstoff-Melamin-Formaldehyd-Harz eingesetzt wird, das ausschließlich in einem wässrigen Reaktionsmedium verarbeitet und dem eine Polymerdispersion zugesetzt wurde,
wobei das Tränkharz in einer ersten Stufe dem Vorkondensat aus Harnstoff, Melamin und Formaldehyd in Gegenwart eines wenig reaktiven Katalysators im pH-Bereich von 7,0 bis 8,5 in einem Temperaturbereich von 75°C bis 95°C hergestellt und in einer zweiten Stufe ein stärkerer saurer Katalysator zusammen mit Harnstoff, Melamin und einer wässrigen Polymerdispersion im pH-Bereich 4,0 bis 6,0 und einer Temperatur von 75°C bis 95°C dem Vorkondensat zugegeben und nach Ende der Reaktionszeit das fertige Tränkharz durch Zugabe von Alkali auf einen pH-Wert von 8,0 bis 8,5 eingestellt wurde.

2. Phenolfreie Dekorlaminate nach Anspruch 1, **dadurch gekennzeichnet, dass** als Trägermaterialien Kraftpapier und/oder andere saugfähige Papiere verwendet werden.

3. Phenolfreie Dekorlaminate nach Anspruch 1 oder 2, **dadurch gekennzeichnet, dass** Harnstoff-Melamin-Formaldehyd-Harze mit einer Zusammensetzung von 20 Masse% bis 45 Masse% Formaldehyd, 35 Masse% bis 60 Masse% Harnstoff und 2 bis 20 Masse% Melamin zur Imprägnierung verwendet wird.

4. Phenolfreie Dekorlaminate nach einem oder mehreren der Ansprüche 1 bis 3, **dadurch gekennzeichnet, dass** als Polymerdispersion solche von Acrylat- oder Methacrylat-, Vinylacetat-Homopolymerisaten, Styrol-Acrylat-, Styrol-Methacrylat, Polybutadien-Styrol-Co-Polymeren in Mengen von 0,5 Masse% bis 10 Masse% eingesetzt wird.

5. Verfahren zur Herstellung phenolfreier Dekorlaminate (= dekorative Schichtpressstoffplatten wie HPL, CPL, LPL) aus mehrschichtigen Trägermaterialien, die mit Bindemitteln (Tränkharz) getränkt sind, nach einem oder mehreren der Ansprüche 1 bis 4, **dadurch gekennzeichnet, dass**
- Harnstoff, Melamin und Formaldehyd in Gegenwart eines wenig reaktiven Katalysators im pH-Bereich von 7,0 bis 8,0 bei einer Temperatur von 75°C bis 95°C umgesetzt,
- in einer zweiten Stufe Harnstoff, Melamin, ein stärkerer saurer Katalysator im pH-Bereich von 4,0 bis 6,0 und gegebenenfalls eine Polymerdispersion bei 75°C bis 95°C zugegeben werden,
- nach Abschluss der Reaktion der Harzansatz neutralisiert und
- das Trägermaterial mit diesem so gewonnenen Harzsystem getränkt und verpresst wird.

6. Verfahren zur Herstellung phenolfreier Dekorlaminate nach Anspruch 5, **dadurch gekennzeichnet, dass** als Katalysator in der ersten Stufe der Harzherstellung ein Alkylammoniumsalz sowie Salze von Aminoalkoholen mit starken organischen oder anorganischen Säuren in einer Menge von 0,05 Masse% bis 1,0 Masse%, bezogen auf den Harzansatz, verwendet wird.

7. Verfahren zur Herstellung phenolfreier Dekorlaminate nach Anspruch 5, **dadurch gekennzeichnet, dass** als Katalysator in der zweiten Stufe der Harzherstellung eine Mineralsäure oder starke organische Säure oder deren Ammoniumsalze in Mengen von 1 Masse% bis 15 Masse%, bezogen auf den Harzanteil, verwendet werden.

8. Verfahren zur Herstellung phenolfreier Dekorlaminate nach einem oder mehreren der Ansprüche 5 bis 7, **dadurch gekennzeichnet, dass** dem Harzsystem erneut ein leicht saurer, wenig reaktiver Katalysator zugegeben wird, bevor anschließend das Trägermaterial, insbesondere Kraftpapiere mit einem Oberflächen-pH-Wert von 7,0 bis 7,5, mit diesem so gewonnenen Harz getränkt und miteinander verpresst werden, wobei der Harzanteil nach dem Trocknen 30 Masse% bis 60 Masse% an der Grundmasse des imprägnierten Materials beträgt.

9. Verfahren zur Herstellung phenolfreier Dekorlaminate nach Anspruch 8, **dadurch gekennzeichnet, dass** dem Harzsystem vor dem Imprägnieren des Kraftpapiers als Katalysator ein Alkylammoniumsalz oder ein Salz von Aminoalkoholen einer starken organischen bzw. anorganischen Säure in einer Menge von 1 Masse% bis 15 Masse% zugegeben und der pH-Wert des Harzsystems auf 6,5 bis 7,5 eingestellt werden.
